# EUROPÄISCHE PATENTSCHRIFT

(11) **EP 0 704 950 B1**
(45) Veröffentlichungstag und Bekanntmachung des Hinweises auf die Patenterteilung: **09.06.1999**
(21) Anmeldenummer: 95810581.9
(22) Anmeldetag: 19.09.1995
(51) Int. Cl.: H02B 13/045, H02B 1/20, H01B 17/30

(54) **Isolator für einen durchgehenden Leiter**
Insulator for a continuous conductor
Isolateur pour un conducteur continu

(30) Priorität: 30.09.1994 IT MI941994
(43) Veröffentlichungstag der Anmeldung: 03.04.1996
(73) Patentinhaber: ABB SACE SPA, I-24100 Bergamo (IT)
(72) Erfinder: Bellon, Eduardo, I-24011 Almè (IT); Capitanio, Roberto, I-24124 Bergamo (IT); Ciboldi, Pietro, I-24100 Bergamo (IT); Pirovano, Giuliano, I-24124 Bergamo (IT)
(74) Vertreter: Kaiser, Helmut, Dr.

(56) Entgegenhaltungen:
- EP-A- 0 200 309

## Beschreibung

Bei der Erfindung wird ausgegangen von einem Isolator für einen durchgehenden Leiter nach dem Oberbegriff von Patentanspruch 1.

Die Erfindung nimmt auf einen Stand der Technik von Isolatoren Bezug wie er in EP-A-0 200 309 angegeben ist. Ein in diesem Stand der Technik beschriebener Isolator dient der gasdichten Durchführung eines elektrischen Leiters durch die metallene Wand eines mit Isoliergas gefüllten Sammelschienenraums an Luft. Der Leiter ist durch eine Öffnung des Isolators hindurchgeführt und ist auf einem die Öffnung begrenzenden Wandabschnitt des Isolators gelagert. Gasdichtigkeit wird durch einen in der Öffung angeordneten Dichtungsring erreicht.

Es ist Ferner bekannt, daß in Schaltschränken, die aus mehreren Kammern bestehen und welche in vorteilhafter Weise aus Blech hergestellt sind und üblicherweise mit einem Inertgas, wie zum Beispiel SF₆ gefüllt sind, ein Strom über elektrische Leiter von der einen Kammer des Schaltschrankes in eine danebenliegende Kammer des Schaltschrankes fließt.

Zu diesem Zweck ist es üblich, in die Wandteile von zwei nebeneinander liegenden Kammern des Schaltschrankes Isolatoren einzubauen, die üblicherweise tassen- oder glockenförmig ausgebildet sind.

Diese Isolatoren werden in einer gewünschten Lage unter Zuhilfenahme von Abstandsringen, die zwischen den Wandteilen der Kammern des Schaltschrankes angeordnet sind, montiert und befestigt. Ferner finden Gewindemuttern Verwendung, mit denen der Körper des Isolators in seiner Arbeitslage gehalten wird.

In den Boden des Isolators, der tassen- oder glockenförmig ausgebildet ist, ist eine durchgehende Bohrung eingebracht, in die nach dem Stand der Technik ein durchgehender Leiter fest eingebaut ist. Der durchgehende Leiter besteht in diesem Fall aus einem zylindrischen, stangenförmigen Körper, dessen Enden in die benachbarten Kammern des elektrischen Schaltschrankes ragen, wo die Enden des Leiters mit elektrisch leitenden Kabeln verbunden sind.

Es konnte festgestellt werden, daß die feste Verbindung zwischen dem Körper des Isolators, der zum Beispiel aus Epoxydharz besteht, und dem aus Kupfer bestehenden Leiter, unter Einsatz eines Gießverfahrens oder eines ähnlichen Vorganges wesentliche Nachteile mit sich bringt.

Der Einbau des Leiters in den Körper des Isolators ist arbeitsaufwendig, die Lageanordnung des aus Kupfer bestehenden Leiters gegenüber dem Körper des Isolators erfordert einen erheblichen Zeitaufwand für das Vergießen des Epoxydharzes, und die Notwendigkeit einer genauen Lageanordnung des Leiters erlaubt keine Automatisierung des Fertigungsvorganges.

Die mit den bekannten Fertigungsverfahren hergestellte mechanische Verbindung zwischen dem Körper des Isolators und dem Körper des durchgehenden Leiters stellt eine feste und starre Verbindung dar, die keine Lageanpassung des aus Kupfer bestehenden Leiters nach der Montage der Vorrichtung ermöglicht. Ferner hat es sich herausgestellt, daß mechanische oder elektrodynamische Belastungen, die auf den Körper des Isolators einwirken, zu einer Beschädigung der starren Verbindung zwischen dem Isolator und dem durchgehenden Leiter führen können, was zu einer Leckbildung und zum Austritt des Inertgases führt. Die elektrodynamischen Belastungen, die auf den Körper des Isolators übertragen werden, können zu unerwüschten Schwingungen im Inneren des Schaltschrankes führen.

Der Erfindung wie sie in Patentanspruch 1 definiert ist, liegt die Aufgabe zugrunde, einen Isolator für einen durchgehenden Leiter zu schaffen, der über einen automatischen Fertigungsvorgang montierbar ist, wobei ein vollständig abgedichtetes Zusammenfügen zwischen Isolatorkörper und durchgehendem Leiter möglich wird, und daß es ferner möglich ist, den durchgehenden Leiter elastisch im Körper des Isolators zu lagern.

In vorteilhafter Weise steht von der Wandung, die die Bohrung im Körper des Isolators begrenzt, eine ringförmige Verdickung ab, die radial zum Zentrum der Bohrung ausgerichtet ist.

Es hat sich als vorteilhaft erwiesen, in der äußeren Umfangsfläche der elastischen Aufnahmehülse eine Nut vorzusehen, mit der die ringförmig ausgebildete, radial von der Wandung der Durchgangsbohrung abstehende Verdickung in Verbindung bringbar ist.

Mit besonderem Vorteil weist der zylinderförmige Körper des durchgehenden Leiters eine Umfangsnut auf, in die ein Teil der elastisch verformbaren Aufnahmehülse eindringt.

In vorteilhafter Weise wird die Umfangsnut des durchgehenden Leiters von zwei kegelstumpfartigen Körpern definiert, die miteinander über ihre den kleineren Durchmesser aufweisenden Enden verbunden sind.

Um die mechanische Verbindung zwischen der elastischen Aufnahmehülse und der in den durchgehenden Leiter eingearbeiteten Nut verbessern zu können, weist der Nutgrund die Form eines gekordelten oder gerändelten Bandes auf.

Es hat sich ferner als vorteilhaft erwiesen, die Wandung, welche die durchgehende Bohrung im Körper des Isolators begrenzt, als konvex ausgebildete Wand mit einer Wölbung zum Zentrum der Bohrung hin auszubilden.

Mit dem Isolator für einen durchgehenden Leiter gemäß der Erfindung werden folgende Vorteile erzielt:

Der Körper des Isolators und der durchgehende Leiter werden untereinander durch Verwendung eines elastischen Bauteiles verbunden; dadurch besteht die Möglichkeit, die Montagevorgänge zu automatisieren.

Der erfindungsgemäss ausgebildete Isolator für den durchgehenden Leiter bildet nach Zusammenfügen der Bauteile keinen starren Körper; dies ermöglicht es, axial oder quer gerichtete Bewegungen aufzunehmen oder auszugleichen. Solche Bewegungen können aufgrund mechanischer und/oder elektrodynamischer Belastung auftreten, es ist aber wichtig, daß dabei die Struktur des Isolators und somit dessen Dichtigkeit nicht beeinflußt wird. Des weiteren wird vermieden, daß die Schwingungen aufgrund von elektrodynamischen Belastungen des Isolatorkörpers in unerwünschter Weise auf den Schaltschrank übertragen werden.

Weitere Vorteile der Erfindung können der folgenden Beschreibung sowie den beigefügten Zeichnungen entnommen werden:
Fig. 1 zeigt einen Schnitt des gesamten Isolators, der zwischen zwei Wandungen, welche zwei Kammern eines Schaltschrankes begrenzen, angeordnet sind;
Fig. 2 zeigt im Schnitt ein erstes Ausführungsbeispiel des Isolators;
Fig. 3 zeigt schematisch den Montagevorgang des Isolators;
Fig. 4 zeigt schematisch eine erste Ausführungsform des erfindungsgemäßen Isolators; und
Fig. 5 zeigt eine weitere Ausführungsform eines Isolators gemäß der Erfindung.

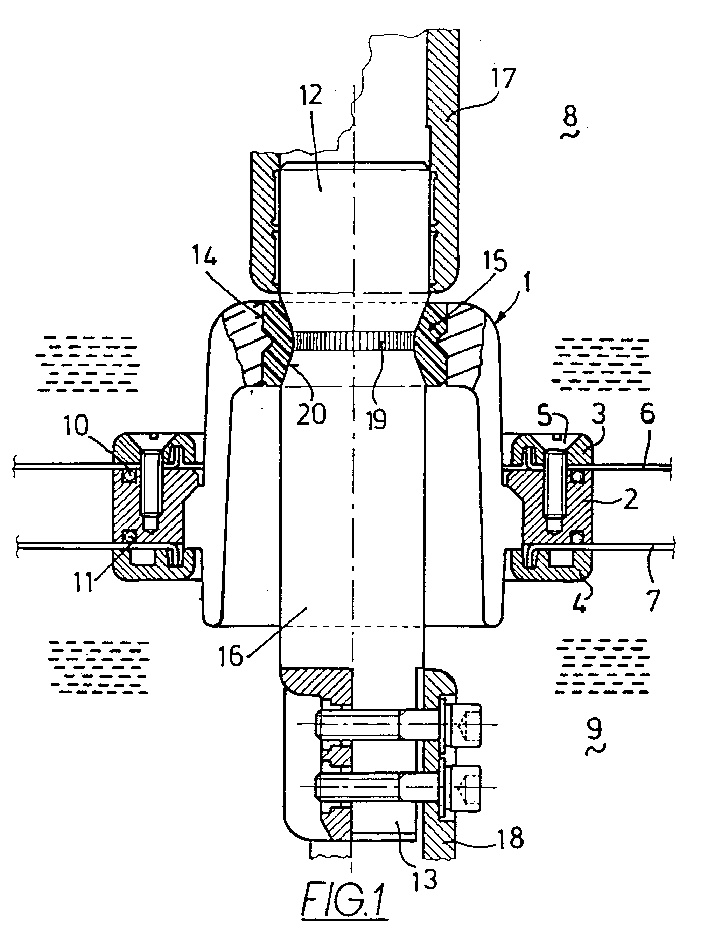

Wie der Fig. 1 zu entnehmen ist, erfolgt die Montage des Isolators 1 unter Zuhilfenahme eines Abstandsringes 2 sowie unter Zuhilfenahme von Befestigungsscheiben 3 und 4, die unter Zuhilfenahme von Schrauben 5 zwischen den Wandungen 6 und 7 befestigt sind. Die Wandungen 6, 7 begrenzen zwei Kammern 8 und 9 eines an sich bekannten elektrischen Schaltschrankes.

Auf beiden Seiten des Abstandsringes 2 sind Dichtungsringe 10 bzw. 11 angeordnet, welche die Kammern 8 und 9, die mit einem Schutzgas (SF₆) gefüllt sind, abdichten.

In Fig. 1 ist der Isolator tassenförmig ausgebildet und in seinem Boden ist eine Durchgangsbohrung 14 eingebracht, die erfindungsgemäß eine elastische Hülse 15 aufnimmt, die von einem zylinderförmigen Leiter 16 durchdrungen wird. Mit dem Ende 12 des zylindrischen Leiters 16 ist dieser mit einer rohrförmigen.Klemme 17 verbunden, wogegen das Ende 13 mit einer flachen Klemme 18 verbunden ist.

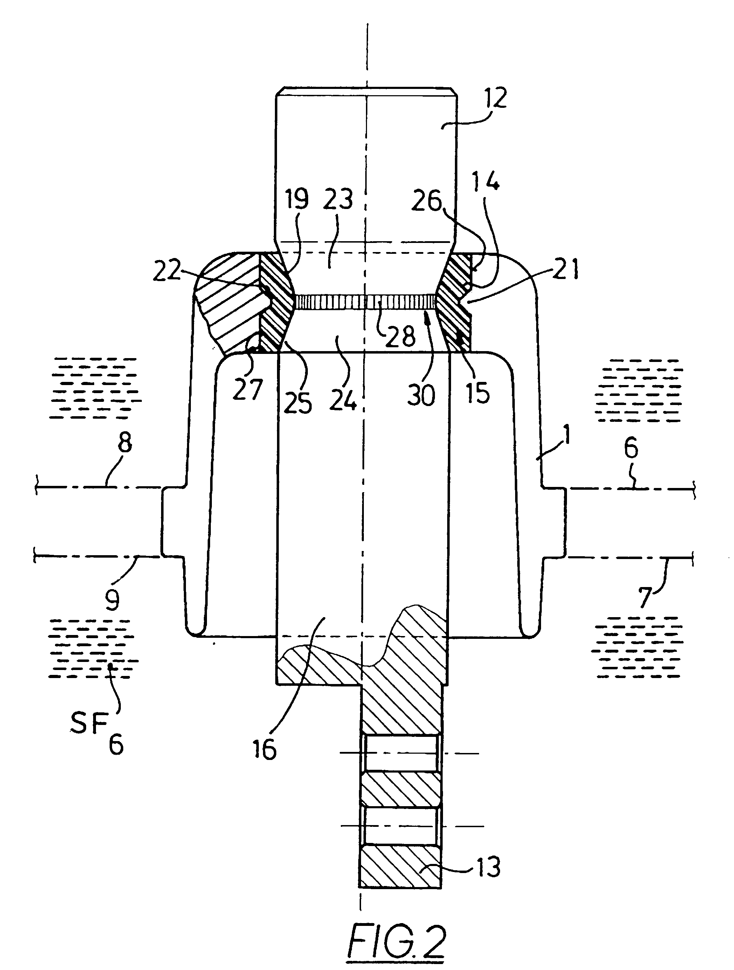

In Übereinstimmung mit der Hülse 15, die aus elastischem Material hergestellt ist, weist der Leiter 16 eine Nut 19 auf, in die das innere Stück 20 der rohrförmigen Hülse 15 eindringt. Der Fig. 2 können weitere Einzelheiten der Erfindung entnommen werden.

So kann der Zeichnung entnommen werden, daß von der Wandung 26, die die Durchgangsbohrung 14 begrenzt, radial zum Inneren der Bohrung 14 eine Verdickung 21 absteht, die formschlüssig mit einer Nut 22, die in die äußere Umfangsfläche 27 der elastischen Hülse 15 eingearbeitet ist, in Wirkverbindung tritt. Selbstverständlich kann die ringförmige Verdickung 21 mit dem elastischen Körper 15 der Hülse auch durch eine einfache Verformung des elastischen Materiales der Hülse 15 in Wirkverbindung treten.

Das elastische Material der Hülse 15 besteht in vorteilhafter Weise aus Gummi oder einem Polyurethanwerkstoff oder einem anderen Kunststoff, der die erforderliche Elastizität aufweist.

In vorteilhafter Weise nimmt der durchgehende Leiter 16 in Übereinstimmung mit der elastischen Hülse 15 eine Umfangsnut auf, die gesamthaft mit 19 gekennzeichnet ist. Mit besonderem Vorteil ist die Nut 19 von den Umfangsflächen zweier kegelstumpfartig ausgebildeter Körper 23 und 24 begrenzt; diese sind mit ihren, einen kleineren Durchmesser aufweisenden Enden verbunden.

In vorteilhafter Weise hat die elastische Hülse 15 derartige Abmessungen, daß sichergestellt ist, daß bei Einbringen des durchgehenden Leiters 16 in die Bohrung 25 der elastischen Hülse 15, diese Hülse elastisch verformt wird und derartig belastet wird, daß ein vorgespannter Körper gebildet wird, der mit einer bestimmten Spannkraft an der Wandung 26 der durchgehenden Bohrung 14 sowie an den Wandungen der Umfangsnute 19 anliegt.

Mit besonderem Vorteil bildet der Boden 28 der Nut 19 eine Umfangsbande 30, in vorteilhafter Weise eine gerändelte oder gekordelte Bande, die zu einer erhöhten Griffigkeit führt und somit eine sehr sichere Anordnung des durchgehenden Leiters 16 im Inneren des Isolators 1 gewährleistet. Besonders wird dadurch vermieden, daß der durchgehende Leiter 16 eine unerwünschte Drehbewegung um seine Längsachse durchführt.

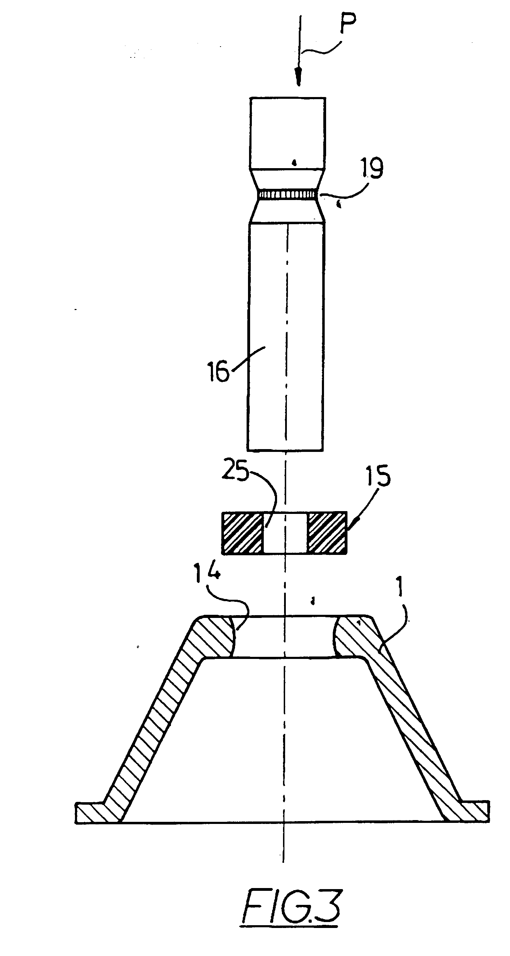

Die Verbindung des Isolators 1 mit der elastischen Hülse 15 und dem durchgehenden Leiter 16 wird genauer anhand der Fig. 3 beschrieben.

In vorteilhafter Weise wird die elastische Hülse 15 unter Vorspannung in die durchgehende Bohrung 14 des Isolators 1 eingesetzt. Daraus folgt, daß dank der ausgewählten Abmessungen die Hülse 15 aus elastischem Material vorgespannt und kraftschlüssig und/oder formschlüssig im Inneren der durchgehenden Bohrung 14 blockiert wird. Im Anschluß wird der Leiter 16, der in vorteilhafter Weise mit einem sich verflüchtigenden Gleitmittel ummantelt ist, einer Kraft (P) ausgesetzt, die zum Beispiel mit dem Stempel einer Montagepresse aufgebracht wird, um somit in die Bohrung 25 der elastischen Hülse 15 eingeführt zu werden. Dadurch wird der Körper der Hülse 15 weiter elastisch verformt und weiter vorgespannt. Der durchgehende Leiter 16 wird unter Einwirken der Kraft (P) soweit vorgeschoben, bis die Nut 19 die elastische Hülse 15 vollständig aufnimmt. Durch die elastische Hülse 15 wird der Leerraum, der von der Umfangsnute 19 begrenzt ist, vollständig ausgefüllt.

Selbstverständlich sind Hülse 15 und Umfangsnut 19 derartig bemessen, daß sichergestellt wird, daß auch nach einer Wirkverbindung zwischen der Nut 19 und dem Körper der Hülse 15 diese ausreichend zusammengepreßt bleibt, um zu gewährleisten, daß der Umfang 19 fest von der Hülse 15 mit der gewünschten Spannkraft gehalten wird.

Diese Tatsache garantiert, daß zwischen dem durchgehenden Leiter 16 und dem Isolator 1 ein vollständiges Abdichten erfolgt, was einen Gasaustritt unterbindet. Ferner wird eine feste aber doch elastische Lageanordnung des Leiters 16 im Körper des Isolators 1 erreicht.

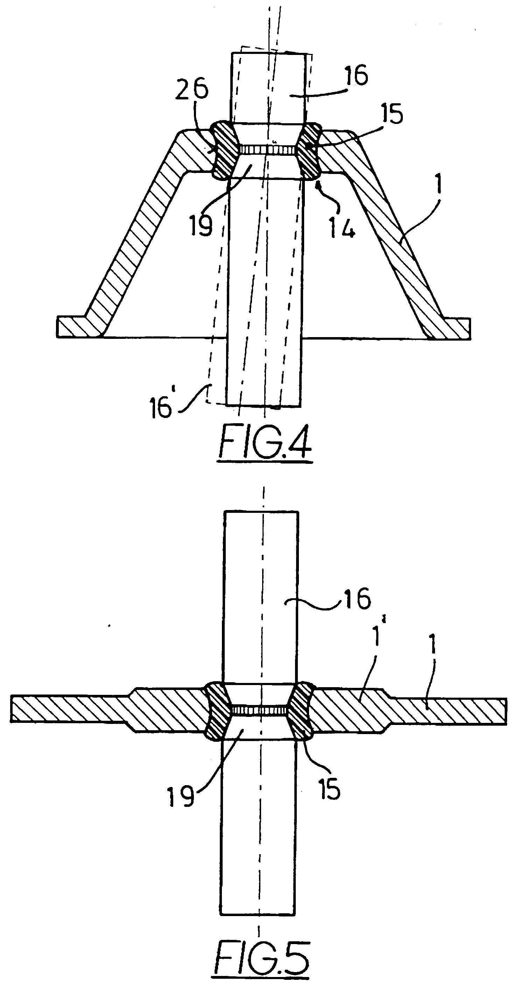

Der Fig. 4 kann entnommen werden, daß der Isolator 1 dank der Vorsehung der elastischen Hülse 15, die mit Vorspannung angeordnet ist, in einer genau festgelegten Lage den durchgehenden Leiter 16 aufnimmt. Gleichzeitig wird aber ein geringes Verschwenken 16' des durchgehenden Leiters 16 (Strichpunktlinie) gegenüber dem Körper des Isolators 1 ermöglicht. Diese Tatsache gestattet eine einfachere Montage des Isolators 1 zusammen mit dem durchgehenden Leiter 16 im Inneren des elektrischen Schaltschrankes und es eröffnet sich die Möglichkeit, gewisse Toleranzen in den Abmessungen auszugleichen. Der durchgehende Leiter 16 ist elastisch im Inneren des Isolators 1 gelagert, was ein Ausgleichen von Schwingungen oder Verformungen der Bauteile aufgrund mechanischer Belastungen oder aufgrund des Vorhandenseins von elektomechanischen Kräften ermöglicht. Die Wand 26, die die durchgehende Bohrung 14 des Isolators 1 begrenzt, ist als konvex gewölbte Wand ausgebildet, die eine Aufnahme bildet, die die Hülse 15 formschlüssig umgibt.

Der Fig. 5 kann entnommen werden, daß die Erfindung auch mittels eines scheibenförmigen Isolators 1 verwirklicht werden kann, wobei der scheibenförmige Isolator 1 mittig eine Verdickung 1' aufweist und unter Zwischenschaltung einer elastischen Hülse 15 den durchgehenden Leiter 16 aufnimmt, der zu diesem Zweck eine Verbindungsnut 19 aufweist.

## Patentansprüche

1. Isolator (1) für einen durchgehenden Leiter (16), der in einem als Bohrung (14) ausgeführten Durchgang den Leiter (16) aufnimmt, wobei zwischen der Wandung (26) des Isolators (1), die die Bohrung (14) begrenzt, und dem Körper des Leiters (16) mit Vorspannung ein Dichtelement angeordnet ist, das aus elastischem Material besteht,
dadurch gekennzeichnet, dass der Isolator (1) zwischen zwei Wandungen (6, 7) benachbarter Kammern (8, 9) eines elektrischen Schaltschrankes angeordnet ist, und dass das Dichtelement als Lagerhülse (15) derart ausgebildet ist, dass der durchgehende Leiter (16) elastisch im Körper des Isolators (1) gelagert ist.

2. Isolator für einen durchgehenden Leiter nach Patentanspruch 1, **dadurch gekennzeichnet**, daß von der Wandung (26), die den Durchgang (14) im Körper des Isolators (1) begrenzt, eine ringförmige Verdickung (21) absteht, die radial zum Zentrum der Bohrung (14) gerichtet ist.

3. Isolator für einen durchgehenden Leiter nach Patentanspruch 1 oder 2, **dadurch gekennzeichnet**, daß der Körper des zylindrisch ausgebildeten durchgehenden Leiters (16) eine Umfangsnut (19) aufweist, in die ein Teil des Körpers der elastischen Hülse (15) eintritt.

4. Isolator für einen durchgehenden Leiter nach Patentanspruch 1 oder 3, **dadurch gekennzeichnet**, daß die Wandung (26), die die durchgehende Bohrung (14) des Isolators (1) begrenzt, als konvex zum Zentrum des Durchgangs (14) hin gewölbte Wand ausgebildet ist.

5. Isolator für einen durchgehenden Leiter nach Patentanspruch 2, **dadurch gekennzeichnet,** daß die Hülse (15) entlang ihrer äußeren Umfangsfläche (27) eine Nut (22) aufweist, mit der die Verdickung (21) in Wirkverbindung tritt.

6. Isolator für einen durchgehenden Leiter nach Patentanspruch 3, **dadurch gekennzeichnet**, daß die Umfangsnut (19) des Leiters (16) von zwei kegelstumpfartig ausgebildeten Körpern (23, 24) begrenzt wird, welche miteinander über ihre, den kleineren Durchmesser aufweisende Enden verbunden sind.

7. Isolator für einen durchgehenden Leiter nach Patentanspruch 3 oder 6, **dadurch gekennzeichnet**, daß die Umfangsnut (19) einen Boden (28) aufweist, der von einer gekordelten oder gerändelten Bande (30) gebildet ist.

## Claims

1. Insulator (1) for a continuous conductor (16), which receives the conductor (16) in a passage designed in the form of a bore (14), a sealing element which consists of elastic material being arranged with prestress between the wall (26) of the insulator (1), which bounds the bore (14), and the body of the conductor (16), characterized in that the insulator (1) is arranged between two walls (6, 7) of neighbouring chambers (8, 9) of an electrical switchgear cabinet, and in that the sealing element is designed as a bearing sleeve (15) in such a way that the continuous conductor (16) is borne elastically in the body of the insulator.

2. Insulator for a continuous conductor according to Patent Claim 1, characterized in that from the wall (26) which bounds the passage (14) in the body of the insulator (1) there protrudes an annular thickening (21), which is directed radially with respect to the centre of the bore (14).

3. Insulator for a continuous conductor according to Patent Claim 1 or 2, characterized in that the body of the cylindrically designed continuous conductor (16) has a circumferential groove (19) into which part of the body of the elastic sleeve (15) enters.

4. Insulator for a continuous conductor according to Patent Claim 1 or 3, characterized in that the wall (26) which bounds the through-bore (14) of the insulator (1) is designed as a wall curving convexly towards the centre of the passage (14).

5. Insulator for a continuous conductor according to Patent Claim 2, characterized in that the sleeve (15) has along its outer circumferential surface (27) a groove (22) with which the thickening (21) enters into operative connection.

6. Insulator for a continuous conductor according to Patent Claim 3, characterized in that the circumferential groove (19) of the conductor (16) is bounded by two frustoconically designed bodies (23, 24) which are connected to one another by means of their ends of smaller diameter.

7. Insulator for a continuous conductor according to Patent Claim 3 or 6, characterized in that the circumferential groove (19) has a bottom (28) which is formed by a knurled band (30).

## Revendications

1. Isolateur (1) pour un conducteur continu (16), qui reçoit le conducteur (16) dans un passage réalisé sous la forme d'un trou (14), dans lequel, entre la paroi (26) de l'isolateur (1), qui délimite le trou (14), et le corps du conducteur (16), est disposé un élément d'étanchéité sous précontrainte, qui se compose d'une matière élastique, caractérisé en ce que l'isolateur (1) est disposé entre deux parois (6, 7) de chambres voisines (8, 9) d'une armoire électrique, et en ce que l'élément d'étanchéité est réalisé sous la forme d'une gaine de support (15) d'une façon telle que le conducteur continu (16) soit supporté de façon élastique dans le corps de l'isolateur (1).

2. Isolateur pour un conducteur continu suivant la revendication 1, caractérisé en ce qu'il se dresse sur la paroi (26), qui délimite le trou (14) dans le corps de l'isolateur (1), une surépaisseur annulaire (21), qui est orientée radialement vers le centre du trou (14).

3. Isolateur pour un conducteur continu suivant la revendication 1 ou 2, caractérisé en ce que le corps du conducteur continu (16) de forme cylindrique présente une gorge périphérique (19), dans laquelle s'engage une partie du corps de la gaine élastique (15).

4. Isolateur pour un conducteur continu suivant la revendication 1 ou 3, caractérisé en ce que la paroi (26), qui délimite le trou traversant (14) de l'isolateur (1), est profilée en une paroi courbe avec une convexité tournée vers le centre du passage (14).

5. Isolateur pour un conducteur continu suivant la revendication 2, caractérisé en ce que la gaine (15) présente, le long de sa surface latérale extérieure (27), une rainure (22) avec laquelle la surépaisseur (21) se place en assemblage actif.

6. Isolateur pour un conducteur continu suivant la revendication 3, caractérisé en ce que la gorge périphérique (19) du conducteur (16) est délimitée par deux -corps (23, 24) de nature tronconique, qui sont assemblés l'un à l'autre par leurs extrémités présentant le plus petit diamètre.

7. Isolateur pour un conducteur continu suivant la revendication 3 ou 6, caractérisé en ce que la gorge périphérique (19) présente un fond (28) qui est formé par une bande (30) à moletage droit ou croisé.
